(19) **Europäisches Patentamt / European Patent Office / Office européen des brevets**

(11) **EP 2 777 139 B1**

(12) **FASCICULE DE BREVET EUROPEEN**

(45) Date de publication et mention de la délivrance du brevet:
**18.01.2017 Bulletin 2017/03**

(51) Int Cl.:
*H02K 21/04* (2006.01)   *H02P 9/36* (2006.01)
*H02P 21/00* (2016.01)   *H02P 21/06* (2016.01)
*H02P 25/26* (2006.01)   *H02P 21/22* (2016.01)

(21) Numéro de dépôt: **12794377.7**

(22) Date de dépôt: **26.10.2012**

(86) Numéro de dépôt international:
**PCT/FR2012/052462**

(87) Numéro de publication internationale:
**WO 2013/060996 (02.05.2013 Gazette 2013/18)**

(54) **PROCEDE DE PILOTAGE D'UNE MACHINE ELECTRIQUE TOURNANTE SYNCHRONE A DOUBLE EXCITATION ET MACHINE ELECTRIQUE TOURNANTE CORRESPONDANTE**

VERFAHREN ZUR STEUERUNG EINER DOPPELT ERREGTE ROTIERENDE ELEKTRISCHE SYNCRHONMASCHINE UND ENTSPRECHENDE ROTIERENDE MASCHINE

CONTROL METHOD FOR A DOUBLE-EXCITATION SYNCHRONOUS ELECTRICAL ROTATING MACHINE AND CORRESPONDING ROTATING MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2011 FR 1159840**

(43) Date de publication de la demande:
**17.09.2014 Bulletin 2014/38**

(73) Titulaire: **Valeo Equipements Electriques Moteur 94046 Créteil Cedex (FR)**

(72) Inventeur: **LI, Li**
**F-78220 Viroflay (FR)**

(56) Documents cités:
EP-A2- 0 631 373    WO-A1-2007/026717
JP-A- 8 331 900    JP-A- 2007 259 575
US-A1- 2007 200 529    US-A1- 2009 071 735

• LI LI ET AL: "Some armature reaction compensation methods numerical design of experiments and optimization for a hybrid excitation machine", ELECTRIC MACHINES AND DRIVES CONFERENCE, 2009. IEMDC '09. IEEE INTERNATIONAL, IEEE, PISCATAWAY, NJ, USA, 3 mai 2009 (2009-05-03), pages 832-838, XP031475868, ISBN: 978-1-4244-4251-5

## Description

### DOMAINE TECHNIQUE DE L'INVENTION.

La présente invention concerne un procédé et un dispositif de pilotage d'une machine électrique tournante synchrone à double excitation, c'est-à-dire comportant un rotor muni d'aimants permanents et d'un bobinage d'excitation.

L'invention concerne également une machine électrique tournante apte à la mise en oeuvre de ce procédé et comprenant ce dispositif. Plus particulièrement, l'invention concerne une machine de ce type pour des applications telle que alternodémarreur, moteur/générateur ou moteur électrique de traction dans des véhicules automobiles électriques et hybrides.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas $CO_2$ de types dits « mild-hybrid » et « full-hybrid » (en terminologie anglaise).

Les applications « mild-hybrid » concernent généralement des machines électriques de l'ordre de 8 à 20 kW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Les applications de type « full-hybrid» concernent généralement des moteurs de 30 à 50 kW pour des architectures de type série et/ou parallèle avec un niveau d'intégration plus abouti du ou des moteurs électriques dans la chaîne de traction du véhicule.

Cependant, les machines électriques à excitation uniquement par aimants permanents présentent des difficultés de défluxage. Hors, dans un véhicule automobile, lorsque la machine électrique est utilisée comme moteur de traction sur différentes missions de circulation du véhicule, celle-ci doit pouvoir fonctionner à des régimes de charge et de vitesse variables et doit donc être défluxable pour atteindre la zone des hautes vitesses.

Les machines à double excitation sont plus facilement défluxables et offrent la possibilité de combiner dans leur rotor une densité d'énergie élevée apportée par les aimants permanents et une capacité à contrôler le flux magnétique dans l'entrefer apportée par le bobinage d'excitation.

Une structure intéressante de machine à double excitation est divulguée dans l'article de Li Li et al. intitulé «Some Armature Reaction Compensation Methods, Numerical Design of Experiments and Optimization for a Hybrid Excitation Machine » et publié dans IEMDC, Miami, USA (2009).

Cet article montre que des simulations numériques de la machine sur ordinateur permettent d'en optimiser l'architecture électromécanique, notamment, par exemple, pour augmenter le couple moteur à basse vitesse.

La présente invention concerne le pilotage de machines électriques tournantes synchrones à double excitation avec une topologie de rotor du type de celle divulguée dans l'article ci-dessus.

Avec l'intensité du courant d'excitation du rotor, on dispose d'un degré de liberté supplémentaire dans le pilotage de la machine par rapport à une machine à aimants permanents seuls, pilotée uniquement par l'intensité et la phase du courant statorique.

Par ailleurs, il est connu par EP0631373 et JP08331900 des procédés de pilotage de machine électrique tournante à aimants permanents.

EP0631373 traite du pilotage d'un moteur synchrone de type à d'excitation hybride, avec un rotor comprenant des aimants permanents et des bobines d'excitation à courant continu. Le flux magnétique est commandé de manière à rester constant lorsqu'une vitesse de rotation du moteur est inférieure à une vitesse de base prédéterminée et à varier de manière inversement proportionnelle à la vitesse de rotation du moteur lorsque la vitesse de rotation est supérieure à la vitesse de base prédéterminée.

JP08331900 décrit un pilotage de machine électrique tournante à aimants permanents dans lequel une démagnétisation des aimants permanents est estimée en fonction de la température et est compensée par une commande de couple accrue.

### DESCRIPTION GENERALE DE L'INVENTION.

Le but de la présente invention est par conséquent d'utiliser ces trois paramètres de pilotage pour améliorer le rendement de la machine en optimisant la répartition du courant et du flux magnétique dans le stator et le rotor.

L'invention a précisément pour objet un procédé de pilotage d'une machine électrique tournante synchrone à double excitation de manière à produire un couple moteur de consigne en fonction d'une vitesse de rotation courante de cette machine.

Cette machine est avantageusement du type de celles comprenant un stator muni de bobinages statoriques parcourus par un courant statorique Is et un rotor comprenant une pluralité de pôles Nord et pôles Sud alternés formés à partir d'une pluralité d'aimants permanents et d'une pluralité de bobines d'excitation parcourues par un courant d'excitation If.

Ces aimants permanents sont logés dans des premiers évidements respectifs se prolongeant axialement et répartis régulièrement dans une partie circonférentielle de la masse magnétique du rotor de manière à définir une pluralité de sections polaires circonférentielles.

Les bobines d'excitation de cette machine sont logées dans des seconds évidements respectifs se prolongeant axialement et répartis régulièrement dans une partie intermédiaire de la masse magnétique du rotor, cette partie intermédiaire étant située entre la partie circonférentielle et une partie centrale du rotor.

Chacune des bobines d'excitation est insérée dans une dent polaire radiale respective formant cloison entre deux des seconds évidements consécutifs, chaque dent polaire étant sensiblement alignée sur un axe radial central du pôle correspondant.

Le procédé de pilotage d'une machine électrique tournante synchrone à double excitation selon l'invention est du type ce ceux où l'on élabore au préalable, de manière connue en soi, un modèle informatique de la machine.

Le procédé selon l'invention est remarquable en ce que:

- on calcule au préalable au moyen de ce modèle informatique pour un point de fonctionnement (couple moteur théorique, vitesse de rotation théorique) une combinaison optimale d'un triplet de paramètres de pilotage constitués d'une intensité statorique Is du courant statorique, d'un angle de déphasage $\psi$ entre le courant statorique et un axe en quadrature de la machine, et d'une intensité d'excitation If du courant d'excitation pour lesquels le rendement de la machine est maximum;
- on mémorise au préalable un ensemble de valeurs de la combinaison optimale ainsi calculée en fonction du couple moteur théorique $\Gamma$ et de la vitesse de rotation théorique $\Omega$;
- on produit le couple moteur de consigne en fonction de la vitesse de rotation courante en fixant une combinaison courante du triplet de paramètres de pilotage à la combinaison optimale au point de fonctionnement (couple moteur de consigne, vitesse de rotation courante) : et

cet ensemble de valeurs de la combinaison optimale est mémorisé sous la forme de lois représentatives dans différents intervalles de ladite vitesse de rotation théorique $\Omega$.

Dans un premier intervalle de la vitesse de rotation théorique $\Omega$, les valeurs de la combinaison optimale comprennent de préférence des intensités statoriques optimales Is variant linéairement en fonction de la vitesse de rotation théorique $\Omega$, le couple moteur théorique $\Gamma$ étant constant.

La première équation correspondante est alors avantageusement paramétrée par des premiers coefficients prédéterminés.

Dans ce premier intervalle de la vitesse de rotation théorique $\Omega$, les valeurs de la combinaison optimale comprennent aussi de préférence des angles de déphasage optimaux $\psi$ proportionnels à une fonction tangente inverse d'une fonction affine de la vitesse de rotation théorique $\Omega$, le couple moteur théorique $\Gamma$ étant constant.

La deuxième équation correspondante est alors avantageusement paramétrée par des deuxièmes coefficients prédéterminés.

Dans ce même premier intervalle de la vitesse de rotation théorique $\Omega$, les valeurs de la combinaison optimale comprennent également de préférence des intensités d'excitation optimales If variant linéairement en fonction de la vitesse de rotation théorique $\Omega$, le couple moteur théorique $\Gamma$ étant constant.

La troisième équation correspondante est alors avantageusement paramétrée par des troisièmes coefficients prédéterminés.

Dans un second intervalle de la vitesse de rotation théorique $\Omega$ borné supérieurement par le premier intervalle, les valeurs de la combinaison optimale comprennent des angles de déphasage optimaux $\psi$ nuls, et des intensités statoriques optimales Is et des intensités d'excitations optimales If liées au couple moteur théorique $\Gamma$ par des quatrièmes coefficients prédéterminés établissant une relation de proportionnalité.

L'invention concerne également une mémoire informatique destinée à la mise en oeuvre du procédé de pilotage d'une machine électrique tournante synchrone à double excitation décrit ci-dessus qui comprend fort avantageusement au moins un code binaire représentatif de l'ensemble des valeurs de la combinaison optimale du triplet de paramètres de pilotage.

De préférence, ce code binaire comprend au moins des éléments représentatifs des premiers, deuxièmes, troisièmes et quatrièmes coefficients prédéterminés intervenant dans les équations ci-dessus.

L'invention concerne également un dispositif de pilotage d'une machine électrique tournante synchrone à double excitation destiné à la mise en oeuvre du procédé selon l'invention et comprenant au moins une mémoire informatique telle que celle ayant les caractéristiques spécifiées ci-dessus.

Une machine électrique tournante synchrone à double excitation, apte à la mise en oeuvre du procédé décrit ci-dessus et du type de celles comprenant un stator muni de bobinages statoriques et un rotor comprenant une pluralité de pôles Nord et pôles Sud alternés formés à partir d'une pluralité d'aimants permanents et d'une pluralité de bobines d'excitation, est également concernée par l'invention.

Dans le type de machines dont il s'agit, les aimants permanents sont logés dans des premiers évidements respectifs se prolongeant axialement et répartis régulièrement dans une partie circonférentielle de la masse magnétique du rotor de manière à définir une pluralité de sections polaires circonférentielles.

Les bobines d'excitation sont logées dans des seconds évidements respectifs se prolongeant axialement et répartis régulièrement dans une partie intermédiaire de la masse magnétique du rotor, cette partie intermédiaire étant située entre la partie circonférentielle et une partie centrale du rotor.

Chacune des bobines d'excitation est insérée dans une dent polaire radiale respective formant cloison entre deux des seconds évidements consécutifs, chaque dent polaire étant sensiblement alignée sur un axe radial central du pôle correspondant.

La machine selon l'invention de ce type est remarquable en ce qu'elle comprend un dispositif de pilotage tel que celui spécifié ci-dessus.

Ces quelques spécifications essentielles auront rendu évidents pour l'homme de métier les avantages apportés par le procédé de pilotage d'une machine électrique tournante synchrone à double excitation selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** montre une vue en coupe transversale simplifiée d'une machine électrique tournante synchrone à double excitation du type concerné par l'invention.

La **Figure 2** montre une courbe de variation du couple moteur théorique en fonction de la vitesse de rotation théorique d'une machine électrique tournante synchrone à double excitation selon l'invention, ainsi que quatre de points de fonctionnement correspondant sur cette courbe à des exemples de consignes de couple de 20, 15, 10 et 5 N.m.

Les **Figures 3a, 3b et 3c** montrent respectivement des courbes de variation des intensités statoriques optimales, des angles de déphasage optimaux et des intensités d'excitation optimales en fonction de la vitesse de rotation théorique pour les quatre consignes de couple de la **Fig. 2.**

**DESCRIPTION DU MODE DE REALISATION PREFERE DE L'INVENTION.**

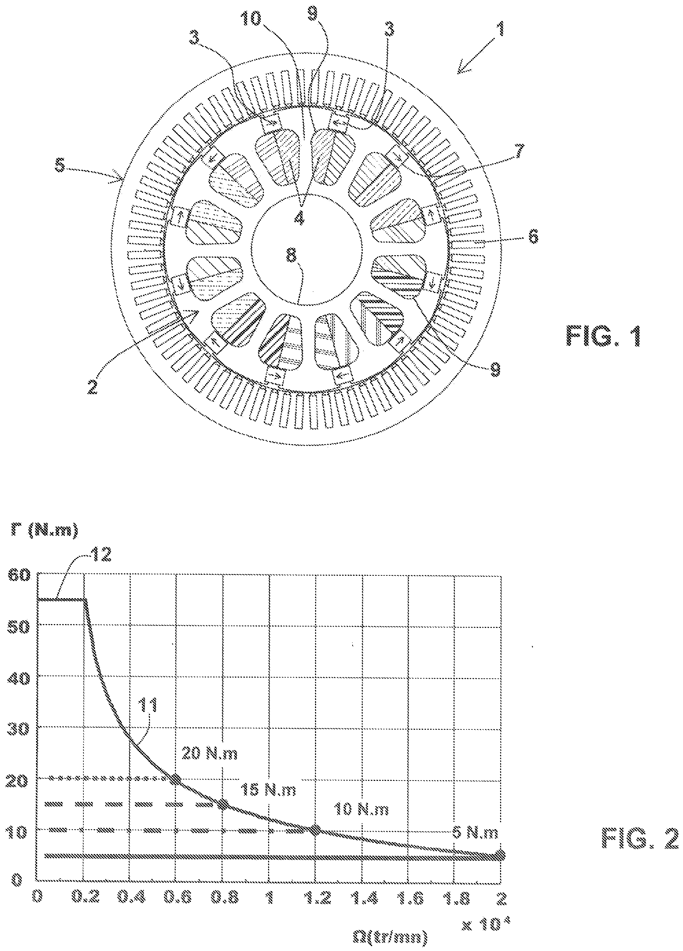

La coupe transversale simplifiée d'une machine électrique tournante à double excitation 1 dans le mode de réalisation préféré de l'invention, représentée sur la **Figure 1,** montre bien l'agencement dans le rotor 2 des aimants permanents 3 et des bobinages d'excitation 4 qui constituent la double excitation et forment une pluralité de pôles saillants, Nord et Sud alternés.

Une réalisation concrète d'une telle machine est par exemple un moteur/génératrice de 5 à 20 KW pour des applications dans des véhicules automobiles du type dits «mild-hybrid».

Dans son mode de fonctionnement en moteur, auquel s'applique le procédé de pilotage selon l'invention, une telle machine peut être conçue pour le démarrage du moteur thermique, l'assistance en couple du moteur thermique ainsi que pour la traction électrique à faible vitesse du véhicule.

Une forme de réalisation particulière de cette machine 1 comprend un stator 5 ayant 72 encoches et un rotor 2 comportant 12 pôles Nord et Sud alternés. Le rotor 2 a un diamètre de l'ordre 100 mm et une longueur axiale de l'ordre de 50 mm. Le rotor 2 comporte 12 aimants permanents ayant une forme sensiblement rectangulaire et pour dimensions, de préférence, 50 mm x 5 mm x 6 mm.

Le stator 5 et le rotor 2 sont réalisés de manière classique avec des paquets de tôles métalliques formant des masses magnétiques.

Les encoches 6 du stator 5 sont prévues pour recevoir des bobinages statoriques (non représentés) et forment entre elles une pluralité de dents statoriques. Selon les formes de réalisation, les encoches 6 seront prévues pour loger des bobinages concentrés, bobinés sur des grosses dents, ou bien des bobinages distribués.

Les bobinages statoriques sont parcourus par un courant statorique dont l'intensité Is et l'angle de déphasage $\psi$ avec un axe en quadrature q de la machine constituent classiquement des paramètres de pilotage de la machine 1 en mode moteur.

Le rotor 2 a la forme générale d'un cylindre multilobé, chacun des lobes correspondant à un pôle magnétique du rotor 2. Les aimants 3 sont disposés de manière enterrée dans la partie circonférentielle du rotor 2 et se prolongent axialement sur toute la longueur du rotor 2. Les aimants 3 sont logés dans des évidements 7 respectifs et sont répartis dans la partie circonférentielle du rotor 2 de telle manière que deux aimants 3 consécutifs, dans le sens de la circonférence, sont disposés avec des orientations polaires différentes, comme cela apparaît bien à la **Figure 1.**

Les aimants 3 sont de préférence des aimants permanents comprenant des terres rares tels que des aimants de type Néodyme-Fer-Bore (NeFeB), Samarium-Fer (SmFe), Samarium-Cobalt (SmCo) ou bien des aimants obtenus à partir de ferrites frittées ou liées.

Le rotor 2 comprend un alésage central 8 débouchant à ses deux extrémités faciales et destiné à recevoir son arbre d'entraînement.

Outre les évidements 7 contenant les aimants 3, le rotor 2 comprend également des évidements 9 qui se répètent pour chaque pôle et s'étendent axialement sur sensiblement toute la longueur du rotor 5.

Les évidements 9 sont prévus pour loger des bobines d'excitation 4 dans le rotor 2. Les évidements 9 sont situés sous les aimants 3, avec autant d'évidements 9 que d'aimants 3. Deux évidements 9 consécutifs sont séparés par une cloison radiale 10 formant dent polaire autour de laquelle est enroulée une bobine d'excitation 4 correspondante.

Les bobines d'excitation 4 peuvent être reliées électriquement selon des montages série, parallèle ou série/parallèle.

La particularité de ce type de machines 1 est que le flux magnétique est quasi nul quand le rotor 2 n'est pas alimenté, parce que le flux magnétique créé par les aimants permanents 3 est pratiquement court-circuité dans le rotor.

Le flux magnétique peut être complètement annulé en inversant la direction du courant d'excitation dans les bobines d'excitation 4.

Dans une machine 1 à double excitation, le flux magnétique dans le rotor 2 est donc entièrement contrôlable par l'intensité d'excitation Is du courant d'excitation circulant dans les bobines d'excitation 4. Cette intensité d'excitation Is est un paramètre de pilotage supplémentaire qui peut permettre à une machine 1 de ce type d'atteindre un domaine de fonctionnement à puissance constante étendu avec un bon rendement et un bon facteur de puissance.

Une courbe 11 représentant les variations d'un couple moteur théorique Γ en fonction d'une vitesse de rotation théorique Ω dans un tel domaine de fonctionnement à puissance constante, obtenue à partir d'un modèle informatique de cette structure électromécanique et d'une simulation sur ordinateur entre des vitesses de rotation comprises entre environ 4000 tr/mn et 20000 tr/mn, est montrée sur la **Figure 2.**

Conformément au but de l'invention, ce modèle informatique est utilisé pour optimiser en chaque point de fonctionnement (couple moteur théorique, vitesse de rotation théorique) le rendement de la machine électrique 1.

En chaque point de fonctionnement, on calcule une combinaison optimale d'un triplet de paramètres de pilotage constitués de l'intensité statorique Is, de l'angle de déphasage entre le courant statorique et l'axe en quadrature de la machine (ou angle d'autopilotage), et de l'intensité du courant d'excitation If pour lesquels le rendement est maximum.

L'ensemble des valeurs Is(Γ, Ω), ψ(Γ, Ω), If(Γ, Ω) de la combinaison optimale en fonction du couple moteur théorique Γ et de la vitesse de rotation théorique Ω est mémorisé en vue du pilotage ultérieur de la machine 1 de manière optimum.

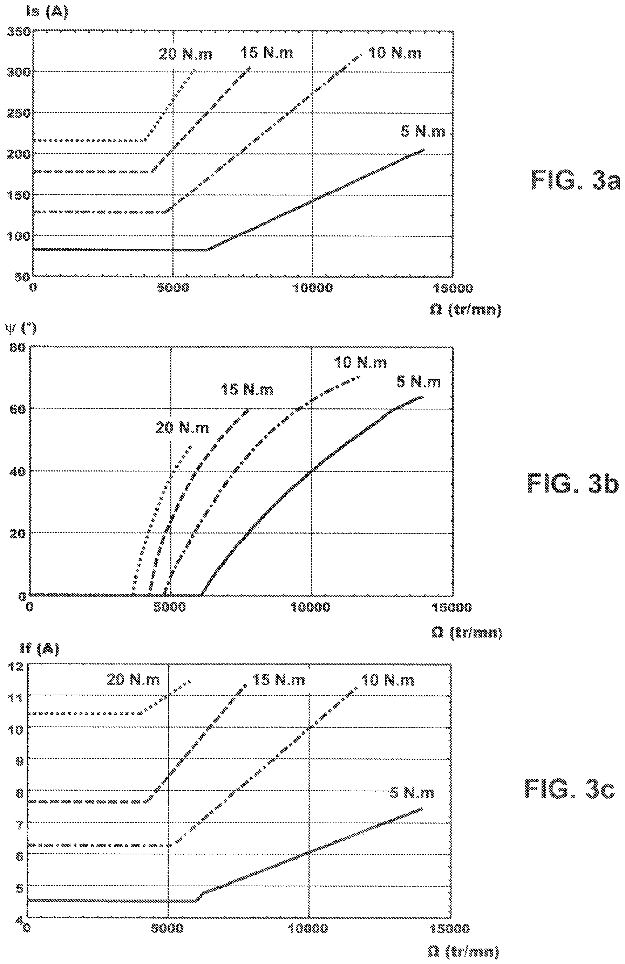

La **Figure 3a** montre des courbes de variation des intensités statoriques optimales pour, à titre d'exemple, les quatre consignes de couple 20 N.m, 15 N.m, 10 N.m et 5 N.m indiquées sur la **Figure 2.**

Dans un premier intervalle de vitesse de rotation théorique Ω, les intensités statoriques optimales Is sont avantageusement représentées par une première équation:

$$Is = Kc1 * \Omega + Kc2$$

où Kc1 et Kc2, Is étant exprimé en ampère, sont des premiers coefficients prédéterminés dépendant du couple moteur théorique Γ satisfaisant à des premières relations:

$$0 < Kc1 < 1$$

et

$$-200 < Kc2 < 200$$

Ce premier intervalle de vitesse de rotation Ω est compris ici entre des première vitesse (vitesse de base) et seconde vitesse (vitesse maximale) de rotation limites théoriques sensiblement égales à 4000 tr/mn et 14000 tr/mn, respectivement, et correspond au domaine de fonctionnement à puissance constante.

Pour les quatre consignes de couple 20 N.m, 15 N.m, 10 N.m et 5 N.m, ces premiers coefficients sont donnés dans la **Table I** ci-dessous:

**Table I**

|  | Kc1 | Kc2 |
|---|---|---|
| 20 N.m | 0.0502 | 14.46 |
| 15 N.m | 0.0366 | 22.39 |
| 10 N.m | 0.0277 | -3.14 |
| 5 N.m | 0.0159 | -16.56 |

La **Figure 3b** montre des courbes de variation des angles de déphasage optimaux ψ du courant statorique pour, à titre d'exemple, les quatre consignes de couples moteurs 20 N.m, 15 N.m, 10 N.m et 5 N.m indiquées sur la **Figure 2.**

Ces angles de déphasage optimaux ψ sont aussi représentés fort avantageusement dans le premier intervalle par une seconde équation:

$$\psi = K1 * atan (\Omega/ K2 + K3)$$

où K1, K2 et K3, ψ étant exprimé en degré, sont des degré deuxièmes coefficients prédéterminés dépendant du couple moteur théorique Γ satisfaisant à des deuxièmes relations:

$$0 < K1 < 200,$$

$$0 < K2 < 20000$$

et

$$-200 < K3 < 0$$

Pour les quatre consignes de couple ci-dessus, ces deuxièmes coefficients sont donnés dans la **Table II** ci-dessous:

**Table II**

|        | K1   | K2   | K3   |
|--------|------|------|------|
| 20 N.m | 50.1 | 1519 | -2.4 |
| 15 N.m | 56.5 | 2167 | -1.9 |
| 10 N.m | 65.0 | 3726 | -1.2 |
| 5 N.m  | 72.8 | 6578 | -0.9 |

Les intensités directe Id et en quadrature Iq dans le stator 5 peuvent être obtenues à partir de l'intensité statorique Is par les équations:

$$Id = -Is*\sin(\psi)$$

$$Iq = Is*\cos(\psi)$$

La **Figure 3c** montre une courbe de variation des intensités d'excitation optimales pour, à titre d'exemple, les quatre consignes de couple 20 N.m, 15 N.m, 10 N.m et 5 N.m indiquées sur la **Figure 2.**
On tire bénéfice d'une représentation de ces intensités d'excitation optimales If dans le premier intervalle par une troisième équation:

$$If = Kc3 * \Omega + Kc4$$

où Kc3 et Kc4, If étant exprimé en ampère, sont des troisièmes coefficients prédéterminés dépendant du couple moteur théorique $\Gamma$ satisfaisant à des troisièmes relations:

$$0 < Kc3 < 25.10^{-4}$$

et

$$-15 < Kc4 < 10$$

Pour les quatre consignes de couple ci-dessus, ces troisièmes coefficients sont donnés dans la **Table III** ci-dessous:

**Table III**

|        | Kc3          | Kc4   |
|--------|--------------|-------|
| 20 N.m | $5.9.10^{-4}$  | 8.043 |
| 15 N.m | $10.6.10^{-4}$ | 3.138 |
| 10 N.m | $7.63.10^{-4}$ | 2.337 |
| 5 N.m  | $3.45.10^{-4}$ | 2.602 |

Dans un second intervalle de vitesse de rotation théorique $\Omega$ correspondant à un domaine de fonctionnement à couple moteur constant représenté par la portion de courbe 12 comprise entre 0 et 2000 tr/mn sur la **Figure 2,** les intensités statoriques optimales Is sont proportionnelles au couple moteur théorique $\Gamma$:

$$Is = Kc * \Gamma$$

Les **Figures 3a, 3b et 3c** montrent que pour une vitesse de rotation théorique $\Omega$ inférieure à sensiblement 4000 tr/mn les intensités statoriques Is et d'excitation If optimales sont toutes proportionnelles au couple moteur théorique $\Gamma$, tandis que l'angle d'autopilotage $\psi$ est nul..
Le modèle informatique permet de calculer les quatrièmes coefficients établissant la relation de proportionnalité.
Les lois représentatives ci-dessus de l'ensemble des valeurs de la combinaison optimale de paramètres de pilotage Is, $\psi$, If pour chaque point de fonctionnement (couple moteur théorique, vitesse de rotation théorique) sont mémorisées dans une mémoire informatique du dispositif de pilotage de la machine électrique tournante 1 selon l'invention.
De la sorte, pour n'importe quelle vitesse de rotation courante de la machine 1, un couple moteur de consigne peut être produit avec le meilleur rendement possible en pilotant la machine avec l'intensité statorique, l'angle de déphasage $\psi$ et l'intensité d'excitation lus dans la mémoire.
Le code binaire implanté dans la mémoire est avantageusement représentatif des valeurs de la combinaison optimale sous la forme de tables dont les entrées seront le couple moteur de consigne et la vitesse de rotation courante, ou bien, représentatif des premiers, deuxièmes, troisièmes et quatrièmes coefficients prédéterminés indiqués ci-dessus.

Comme il va de soi, l'invention ne se limite pas au seul mode de réalisation décrit ci-dessus à titre d'exemple.

D'autres modes de réalisation basées sur des valeurs numériques différentes de celles spécifiées ci-dessus, et correspondant à d'autres modélisations informatiques d'une machine électrique tournante synchrone à double excitation du type décrit, ne sortiraient pas du cadre de la présente invention dans la mesure où ils résultent des revendications ci-après.

## Revendications

1. Procédé de pilotage d'une machine électrique tournante synchrone à double excitation (1) de manière à produire un couple moteur de consigne en fonction d'une vitesse de rotation courante de ladite machine (1), ladite machine (1) étant du type de celles comprenant un stator (5) muni de bobinages statoriques parcourus par un courant statorique et un rotor (2) comprenant une pluralité de pôles Nord et pôles Sud alternés formés à partir d'une pluralité d'aimants permanents (3) et d'une pluralité de bobines d'excitation (4) parcourues par un courant d'excitation, lesdits aimants permanents (3) étant logés dans des premiers évidements respectifs (7) se prolongeant axialement et répartis régulièrement dans une partie circonférentielle de la masse magnétique dudit rotor (2) de manière à définir une pluralité de sections polaires circonférentielles, lesdites bobines d'excitation (4) étant logées dans des seconds évidements respectifs (9) se prolongeant axialement et répartis régulièrement dans une partie intermédiaire de la masse magnétique dudit rotor (2), ladite partie intermédiaire étant située entre ladite partie circonférentielle et une partie centrale (8) dudit rotor (2), chacune desdites bobines d'excitation (4) étant insérée dans une dent polaire radiale respective (10) formant cloison entre deux desdits seconds évidements (9) consécutifs, chaque dent polaire (10) étant sensiblement alignée sur un axe radial central du pôle correspondant, ledit procédé étant du type ce ceux où l'on élabore au préalable un modèle informatique de ladite machine (1), **caractérisé en ce que**:

   - on calcule au préalable au moyen dudit modèle informatique pour un point de fonctionnement (couple moteur théorique $\Gamma$, vitesse de rotation théorique $\Omega$) une combinaison optimale d'un triplet de paramètres de pilotage constitués d'une intensité statorique Is dudit courant statorique, d'un angle de déphasage $\psi$ entre ledit courant statorique et un axe en quadrature de ladite machine, et d'une intensité d'excitation If dudit courant d'excitation pour lesquels le rendement de ladite machine (1) est maximum;
   - on mémorise au préalable un ensemble de valeurs de ladite combinaison optimale en fonction dudit couple moteur théorique $\Gamma$ et de ladite vitesse de rotation théorique $\Omega$;
   - on produit ledit couple moteur de consigne en fonction de ladite vitesse de rotation courante en fixant une combinaison courante dudit triplet de paramètres de pilotage à ladite combinaison optimale audit point de fonctionnement (couple moteur de consigne, vitesse de rotation courante) ; et **en ce que**

ledit ensemble de valeurs de ladite combinaison optimale est mémorisé sous la forme de lois représentatives dans différents intervalles de ladite vitesse de rotation théorique $\Omega$,
dans un premier intervalle de ladite vitesse de rotation théorique $\Omega$, ledit couple moteur théorique $\Gamma$ étant constant, lesdites valeurs de ladite combinaison optimale comprennent des intensités statoriques optimales Is variant linéairement en fonction de ladite vitesse de rotation théorique $\Omega$, des angles de déphasage optimaux $\psi$ proportionnels à une fonction tangente inverse d'une fonction affine de ladite vitesse de rotation théorique $\Omega$, et des intensités d'excitation optimales If variant linéairement en fonction de ladite vitesse de rotation théorique $\Omega$, et dans un second intervalle de ladite vitesse de rotation théorique $\Omega$, borné supérieurement par ledit premier intervalle, lesdites valeurs de ladite combinaison optimale comprennent des angles de déphasage optimaux $\psi$ nuls, et des intensités statoriques optimales Is et des intensités d'excitations optimales If liées audit couple moteur théorique $\Gamma$ par des quatrièmes coefficients prédéterminés établissant une relation de proportionnalité.

2. Procédé de pilotage d'une machine électrique tournante synchrone à double excitation (1) selon la revendication 1, **caractérisé en ce que** lesdites intensités statoriques optimales Is sont représentées dans ledit premier intervalle par une première équation:

$$Is = Kc1 * \Omega + Kc2$$

où Kc1 et Kc2, Is étant exprimé en ampère, sont des premiers coefficients prédéterminés dépendant dudit couple moteur théorique $\Gamma$ satisfaisant à des premières relations:

$$0 < Kc1 < 1$$

et

$$-200 < Kc2 < 200$$

ledit premier intervalle étant compris entre des première et seconde vitesses de rotation limites théoriques sensiblement égales à 4000 tr/mn et 14000 tr/mn, respectivement.

3. Procédé de pilotage d'une machine électrique tournante synchrone à double excitation (1) selon la revendication 1 ou 2, **caractérisé en ce que** lesdits angles de déphasage optimaux $\psi$ sont représentées dans ledit premier intervalle par une seconde équation:

$$\psi = K1 * atan (\Omega/ K2 + K3)$$

où K1, K2 et K3, $\psi$ étant exprimé en degré, sont des deuxièmes coefficients prédéterminés dépendant dudit couple moteur théorique $\Gamma$ satisfaisant à des deuxièmes relations:

$$0 < K1 < 200,$$

$$0 < K2 < 20000$$

et

$$-200 < K3 < 0$$

ledit premier intervalle étant compris entre des première et seconde vitesses de rotation limites théoriques sensiblement égales à 4000 tr/mn et 14000 tr/mn, respectivement.

4. Procédé de pilotage d'une machine électrique tournante synchrone à double excitation (1) selon l'une quelconque des revendications 1 à 3 précédentes, **caractérisé en ce que** lesdites intensités d'excitation optimales If sont représentées dans ledit premier intervalle par une troisième équation:

$$If = Kc3 * \Omega + Kc4$$

où Kc3 et Kc4, If étant exprimé en ampère, sont des troisièmes coefficients prédéterminés dépendant dudit couple moteur théorique $\Gamma$ satisfaisant à des troisièmes relations:

$$0 < Kc3 < 25.10^{-4}$$

et

$$-15 < Kc4 < 10$$

ledit premier intervalle étant compris entre des première et seconde vitesses de rotation limites théoriques sensiblement égales à 4000 tr/mn et 14000 tr/mn, respectivement.

**Patentansprüche**

1. Verfahren zur Steuerung einer drehenden elektrischen Synchronmaschine mit Doppelerregung (1), um ein Sollantriebsdrehmoment abhängig von einer aktuellen Drehgeschwindigkeit der Maschine (1) zu erzeugen, wobei die Maschine (1) von der Art derjenigen ist, die einen mit von einem Statorstrom durchflossenen Statorwicklungen versehenen Stator (5) und einen Rotor (2) enthalten, der eine Vielzahl von abwechselnden Nord- und Südpolen enthält, die ausgehend von einer Vielzahl von Dauermagneten (3) und einer Vielzahl von von einem Erregerstrom durchflossenen Erregerspulen (4) gebildet werden, wobei die Dauermagnete (3) in ersten Aussparungen (7) untergebracht sind, die sich axial verlängern und gleichmäßig in einem Umfangsbereich der magnetischen Masse des Rotors (2) verteilt sind, um eine Vielzahl von Umfangspolabschnitten zu definieren, wobei die Erregerspulen (4) in zweiten Aussparungen (9) untergebracht sind, die sich axial verlängern und gleichmäßig in einem Zwischenbereich der magnetischen Masse des Rotors (2) verteilt sind, wobei der Zwischenbereich sich zwischen dem Umfangsbereich und einem zentralen Bereich (8) des Rotors (2) befindet, wobei jede der Erregerspulen (4) in einen jeweiligen radialen Polzahn (10) eingefügt ist, der eine Trennwand zwischen zwei der zweiten aufeinanderfolgenden Aussparungen (9) bildet, wobei jeder Polzahn (10) im Wesentlichen auf eine zentrale radiale Achse des entsprechenden Pols ausgerichtet ist, wobei das Verfahren von der Art derjenigen ist, bei denen vorab ein EDV-Modell der Maschine (1) erarbeitet wird, **dadurch gekennzeichnet, dass**:

   - vorab mittels des EDV-Modells für einen Betriebspunkt (theoretisches Antriebsdrehmoment $\Gamma$, theoretische Drehgeschwindigkeit $\Omega$) eine optimale Kombination eines Triplets von Steuerparametern berechnet wird, die aus einer Statorstärke Is des Statorstroms, einem Phasenverschiebungswinkel ψ zwischen dem Statorstrom und einer Quadraturachse der Maschine und einer Erregungsstärke If des Erregerstroms bestehen, für die der Wirkungsgrad der Maschine (1) maximal ist;
- vorab eine Einheit von Werten der optimalen Kombination abhängig vom theoretischen Antriebsdrehmoment Γ und von der theoretischen Drehgeschwindigkeit Ω gespeichert wird;
- das Sollantriebsdrehmoment abhängig von der aktuellen Drehgeschwindigkeit erzeugt wird, indem eine aktuelle Kombination des Triplets von Steuerparametern auf die optimale Kombination am Betriebspunkt (Sollantriebsdrehmoment, aktuelle Drehgeschwindigkeit) festgelegt wird; und dass die Einheit von Werten der optimalen Kombination in Form von Gesetzen gespeichert wird, die in verschiedenen Bereichen für die theoretische Drehgeschwindigkeit Ω repräsentativ sind,

in einem ersten Bereich der theoretischen Drehgeschwindigkeit Ω, wobei das theoretische Antriebsdrehmoment Γ konstant ist, die Werte der optimalen Kombination optimale Statorstärken Is, die linear abhängig von der theoretischen Drehgeschwindigkeit Ω variieren, optimale Phasenverschiebungswinkel ψ proportional zu einer inversen Tangensfunktion einer affinen Funktion der theoretischen Drehgeschwindigkeit Ω, und optimale Erregungsstärken If enthalten, die linear abhängig von der theoretischen Drehgeschwindigkeit Ω variieren, und

in einem zweiten Bereich der theoretischen Drehgeschwindigkeit Ω, nach oben begrenzt durch den ersten Bereich, die Werte der optimalen Kombination optimale Phasenverschiebungswinkel ψ Null und optimale Statorstärken Is und optimale Erregungsstärken If enthalten, die mit dem theoretischen Antriebsdrehmoment Γ durch vierte vorbestimmte Koeffizienten verbunden sind, die eine Proportionalitätsbeziehung erstellen.

2.  Verfahren zur Steuerung einer drehenden elektrischen Synchronmaschine mit Doppelerregung (1) nach Anspruch 1, **dadurch gekennzeichnet, dass** die optimalen Statorstärken Is im ersten Bereich durch eine erste Gleichung dargestellt werden:

$$\text{Is} = \text{Kc1} * \Omega + \text{Kc2}$$

wobei Kc1 und Kc2, mit Is in Ampere ausgedrückt, vom theoretischen Antriebsdrehmoment Γ abhängende erste vorbestimmte Koeffizienten sind, die erste Beziehungen erfüllen:

$$0 < \text{Kc1} < 1$$

und

$$-200 < \text{Kc2} < 200$$

wobei der erste Bereich zwischen ersten und zweiten theoretischen Grenzdrehgeschwindigkeiten liegt, die im Wesentlichen gleich 4000 U/min bzw. 14000 U/min sind.

3.  Verfahren zur Steuerung einer drehenden elektrischen Synchronmaschine mit Doppelerregung (1) nach Anspruch 1 oder 2, **dadurch gekennzeichnet, dass** die optimalen Phasenverschiebungswinkel ψ im ersten Bereich durch eine zweite Gleichung dargestellt werden:

$$\psi = \text{K1} * \text{atan} (\Omega / \text{K2} + \text{K3})$$

wobei K1, K2 und K3, mit ψ in Grad ausgedrückt, vom theoretischen Antriebsdrehmoment Γ abhängende zweite vorbestimmte Koeffizienten sind, die zweite Beziehungen erfüllen:

$$0 < \text{K1} < 200,$$

$$0 < \text{K2} < 20000$$

und

$$-200 < \text{K3} < 0$$

wobei der erste Bereich zwischen ersten und zweiten theoretischen Grenzdrehgeschwindigkeiten liegt, die im Wesentlichen gleich 4000 U/min bzw. 14000 U/min sind.

4.  Verfahren zur Steuerung einer drehenden elektrischen Synchronmaschine mit Doppelerregung (1) nach einem der vorhergehenden Ansprüche 1 bis 3, **dadurch gekennzeichnet, dass** die optimalen Erregungsstärken If im ersten Bereich durch eine dritte Gleichung dargestellt werden:

$$If = Kc3 * \Omega + Kc4$$

wobei Kc3 und Kc4, mit If in Ampere ausgedrückt, vom theoretischen Antriebsdrehmoment $\Gamma$ abhängende dritte vorbestimmte Koeffizienten sind, die dritte Beziehungen erfüllen:

$$0 < Kc3 < 25.10^{-4}$$

und

$$-15 < Kc4 < 10$$

wobei der erste Bereich zwischen ersten und zweiten theoretischen Grenzdrehgeschwindigkeiten liegt, die im Wesentlichen gleich 4000 U/min bzw. 14000 U/min sind.

**Claims**

1. Method for controlling a double-excitation synchronous rotating electrical machine (1) so as to produce a setpoint motor torque as a function of a current rotational speed of said machine (1), said machine (1) being of the type comprising a stator (5) provided with stator windings through which a stator current passes and a rotor (2) comprising a plurality of alternating north and south poles formed using a plurality of permanent magnets (3) and a plurality of excitation windings (4) through which an excitation current passes, said permanent magnets (3) being housed in respective first recesses (7) that extend axially and are distributed regularly in a circumferential portion of the magnetic mass of said rotor (2) so as to define a plurality of circumferential pole sections, said excitation windings (4) being housed in respective second recesses (9) that extend axially and are distributed regularly in an intermediate portion of the magnetic mass of said rotor (2), said intermediate portion being located between said circumferential portion and a central portion (8) of said rotor (2), each one of said excitation windings (4) being inserted into a respective radial pole tooth (10) forming a partition between two of said consecutive second recesses (9), each pole tooth (10) being essentially aligned with a central radial axis of the corresponding pole, said method being of the type in which a computer model of said machine (1) is developed beforehand, **characterized in that**:

- one calculates, beforehand and using said numerical model, for an operating point (theoretical motor torque r, theoretical rotational speed $\Omega$), an optimum combination of a triplet of control parameters consisting of an intensity Is of said stator current, a phase shift angle $\psi$ between said stator current and a quadrature axis of said machine, and an intensity If of said excitation current, for which parameters the performance of said machine (1) is at a maximum;
- one saves, beforehand, a set of values of said optimum combination as a function of said theoretical motor torque $\Gamma$, and said theoretical rotational speed $\Omega$;
- one produces said setpoint motor torque as a function of said current rotational speed by fixing a current combination of said triplet of control parameters to said optimum combination at said operating point (setpoint motor torque, current rotational speed); and **in that** said set of values of said optimum combination is saved in the form of representative laws in various intervals of said theoretical rotational speed $\Omega$,

in a first interval of said theoretical rotational speed $\Omega$, said theoretical motor torque $\Gamma$ being constant, said values of said optimum combination comprise optimum stator current intensities Is varying linearly as a function of said theoretical rotational speed $\Omega$, optimum phase shift angles $\psi$ proportional to an inverse tangent function of an affine function of said theoretical rotational speed $\Omega$, and optimum excitation current intensities If varying linearly as a function of said theoretical rotational speed $\Omega$, and

in a second interval of said theoretical rotational speed $\Omega$, bounded at the top by said first interval, said values of said optimum combination comprise optimum phase shift angles $\psi$ which are zero, and optimum stator current intensities Is and optimum excitation current intensities If that are linked to said theoretical motor torque $\Gamma$ by predetermined fourth coefficients establishing a relation of proportionality.

2. Method for controlling a double-excitation synchronous rotating electrical machine (1) according to Claim 1, **characterized in that** said optimum stator current intensities Is are represented in said first interval by a first equation:

$$Is = Kc1 * \Omega + Kc2$$

where Kc1 and Kc2, Is being expressed in amperes, are predetermined first coefficients that are dependent on said theoretical motor torque r satisfying first relations:

$$0 < Kc1 < 1$$

and

$$-200 < Kc2 < 200$$

said first interval being between first and second theoretical limit rotational speeds approximately equal to 4000 rpm and 14,000 rpm respectively.

3. Method for controlling a double-excitation synchronous rotating electrical machine (1) according to Claim 1 or 2, **characterized in that** said optimum phase shift angles $\psi$ are represented in said first interval by a second equation:

$$\Psi = K1 * \arctan(\Omega/K2 + K3)$$

where K1, K2 and K3, $\psi$ being expressed in degrees, are predetermined second coefficients that are dependent on said theoretical motor torque r satisfying second relations:

$$0 < K1 < 200,$$

$$0 < K2 < 20,000$$

and

$$-200 < K3 < 0$$

said first interval being between first and second theoretical limit rotational speeds approximately equal to 4000 rpm and 14,000 rpm respectively.

4. Method for controlling a double-excitation synchronous rotating electrical machine (1) according to one of Claims 1 to 3, **characterized in that** said optimum excitation current intensities If are represented in said first interval by a third equation:

$$If = Kc3 * \Omega + Kc4$$

where Kc3 and Kc4, If being expressed in amperes, are predetermined third coefficients that are dependent on said theoretical motor torque r satisfying third relations:

$$0 < Kc3 < 25 \times 10^{-4}$$

and

$$-15 < Kc4 < 10$$

said first interval being between first and second theoretical limit rotational speeds approximately equal to 4000 rpm and 14,000 rpm respectively.

**FIG. 1**

**FIG. 2**

Is (A)

FIG. 3a

ψ (°)

FIG. 3b

If (A)

FIG. 3c

13

## RÉFÉRENCES CITÉES DANS LA DESCRIPTION

**Documents brevets cités dans la description**

- EP 0631373 A

- JP 08331900 B

**Littérature non-brevet citée dans la description**

- **LI LI et al.** Some Armature Reaction Compensation Methods, Numerical Design of Experiments and Optimization for a Hybrid Excitation Machine. *IEMDC,* 2009